# EUROPEAN PATENT SPECIFICATION

(11) **EP 2 434 905 B1**
(45) Date of publication and mention of the grant of the patent: **19.03.2014**
(21) Application number: 10724257.0
(22) Date of filing: 09.06.2010
(51) Int. Cl.: A23L 1/317, A23L 1/314, A23L 1/318, C11B 1/12, C11B 1/14, C11B 1/16, A22C 17/00

(54) **RECOVERY OF NON-COAGULATED PRODUCT IN RED MEAT FAT REDUCTION PROCESSES**
GEWINNUNG EINES NICHT KOAGULIERTEN PRODUKTS IM FETTREDUKTIONSVERFAHREN FÜR ROTES FLEISCH
RÉCUPÉRATION DE PRODUIT NON COAGULÉ DANS DES PROCÉDÉS DE RÉDUCTION DE GRAISSE DANS DE LA VIANDE ROUGE

(43) Date of publication of application: 04.04.2012
(73) Proprietor: Alfa Laval Corporate AB, 221 00 Lund (SE)
(72) Inventor: Ludvigsen, Bent, 2765 Smoerum (DK)
(74) Representative: Rasmussen, Torben Ravn
(86) International application number: PCT/DK2010/050130
(87) International publication number: WO 2011/154000

(56) References cited:
- GB-A- 2 106 367
- US-A- 3 177 080
- US-A1- 2004 265 470
- [Online] Retrieved from the Internet: <URL:http://goldpeg.com/rotatherm/how-rotat herm-works.htm>
- [Online] Retrieved from the Internet: <URL:http://www.fao.org/documents/en/detail s/59815>
- H. W. OCKERMAN, C. L. HANSEN: 'Animal By-Product Processing & Utilization', pages 114 - 117

## Description

The present invention relates to a method for producing a defatted meat product. More particular, the present invention relates to a method for removing water added during the defatting process and recovering water soluble matter such as blood proteins and cytoplasm proteins from the water. The present invention may be performed in a plant for producing a defatted meat product.

### Background of the invention

Advanced meat recovery (AMR) is a slaughterhouse process by which the last traces of usable meat are removed from bones and other carcass materials after the primal cuts have been carved off manually.

The machinery used in this process separates meat from bone by scraping, shaving, or pressing the meat from the bone without breaking or grinding the bone. Products produced by advanced meat recovery machinery can be labeled using terms associated with hand-deboned product (e.g., "meat trimmings" and "ground meat"). AMR meat typically is used as an ingredient in products requiring further processing. The meat is comparable in appearance, texture, and composition to meat trimmings and similar meat products derived by hand.

The raw material from AMR can be high in fat content but still contain visible lean meat. Lean, finely-textured beef (FTB), previously called fat-reduced tissue or partially defatted tissue, is a lean edible meat ingredient derived as by-product from such fatty beef trimmings. FTB is formed when the lean meat is separated through a rendering process to achieve a relatively low-fat lean meat product. Rendering is the heating of meat products to separate out the meat from the fat. Production of FTB changes the original trimmings from a fatty, low quality, low value product to a relatively lean and valuable product. FTB is used in the meat industry as an ingredient in ground beef, raw hamburger patties, and frozen meat such as frozen hamburger patties. In a typical mechanical defatted meat process the fatty meat tissue is initially ground in a grinder, followed by heating of the ground fatty meat tissue. By heating, the fat content of the fatty meat tissue is liquefied. The solid meat is separated from the liquefied fat by e.g. a decanter centrifuge. Some of the issues with respect to the defatting process relates to the impact on the colour of the meat product. During the processing of FTB the meat is rendered to remove the fatty material. The heating of the FTB during manufacturing can turn the meat a brownish colour. The brownish colour of the FTB may limit the amount of material that can be added to ground beef products.

Mechanical separation of fat from fish, meat or poultry meat products by centrifugation after a thermal treatment without denaturing of proteins is an established method that has been used for many years predominately in US on fatty beef tissue and mechanically deboned turkey meat. US 3,020,160 and US 3,177,080 both describe such processes. US 3,020,160 relates to the mechanical defatting of fatty tissue derived from animals to produce an uncooked meat product, i.e. a meat product in which the protein is not coagulated. US 3,177,080 relates to processing meat and primarily the separation of fat from meat without raising the temperature of the meat sufficiently to coagulate the protein therein.

GB 2106367 relates to the production of fat and meal from an animal raw material. The process involves treatment of comminuted raw material at a temperature between 40° and 60°C.

US 5,552,173 also relates to mechanical defatting of meat tissue, in particular the document relates to the use of a decanter centrifuge for recovering the defatted meat by forming a meat layer, an intermediate boundary layer containing particles of fat tissue, meat and moisture, and a fat layer.

PCT/US2006/025879 relates to the use of carbon monoxide as a process aid to ameliorate the loss of red colour of fat-beef-trimmings while they are heat treated to produce finely textured beef. The finely textured beef may be exposed to an elevated level of carbon monoxide before, during, or after the finely textured beef is heated to improve the final colour of the finely textured beef product.

These later methods typically adds water to the product either as tempered water or by direct steam injection heating, whereby typical 10 - 30 % water is added to the meat product. This may very well improve the fat extraction, but it also allows the extraction of water soluble matter, such as blood proteins and cytoplasm proteins. The addition of water thus represent a loss of water soluble product, as the effluent product from the decanter centrifugation stage is typically heated to 95°C prior to purifying the effluent to recover the clean fat. Once this has occurs the proteins have coagulated, and cannot be recovered as a meat product. In some processes, for example such as the one described in PCT/US2006/025879, a clarifying centrifuge is implemented on the decanter effluent phase to recover the water phase and adding it back to the meat fraction recovered by the decanter. This solve the problem on the yield loss, however the added water decreases the functionality and makes the product more difficult to use in formulating recipes. Adding too much water to the meat reduces the ability of the meat to bind, making it more difficult to shape the meat and/or prepare it by e.g. frying or cooking. In addition, some countries food legislations will require that such a product is labeled "Water added" or similar, as the end product contains more water than the starting material.

Therefore, the object of the present invention is to provide a method that limits the amount of water contained in the final defatted meat product, preferably to at least the water-content found in the original fatty meat tissue.

### Summary of the invention

A first aspect of the present invention relates to a method for producing a defatted meat product comprising the steps of:
- heating ground fatty meat tissue to a temperature below the coagulation temperature of the fatty meat tissue,
- adding water or steam to the fatty meat tissue,
- separating the fatty meat tissue in a liquefied fat-containing portion and a defatted meat portion,
- recovering an aqueous phase from the liquefied fat-containing portion, and
- adding and mixing the aqueous phase to the defatted meat portion,
wherein the aqueous phase is concentrated at a temperature of 50°C or less by removal of water prior to the addition to the defatted meat portion.

The addition of water or steam may occur before during or after the heating of the ground fatty meat tissue, as the case may be. Additional steps may be performed at any point during the meat defatting procedure and individual steps may be repeated and/or performed several times at various points in the procedure.

Initially, the fatty meat tissue is ground in a meat grinder. Reducing the trimmings to a uniform size allows for a greater surface area to aid in heat penetration and fat extraction during the later heating step.

Water may be added to the product during the meat grinding step either as tempered water or by direct steam injection heating. Typically, an amount of 10 - 30% by weight of water is added during the processing of fatty meat tissue.

Once the meat trimmings are ground they are heated. The ground fatty meat tissue is heated to a temperature below the coagulation temperature to avoid thermal damages of the meat, i.e. to essentially maintain the colour, taste, functionality and flavour of raw meat. The fat content of the fatty meat tissue melts or softens during the heating process resulting in a slurry containing ground fatty meat.

The heated ground meat may be further comminuted in a micro-cutter or an emulsifier. Optionally, water is added at this stage.

The heated fatty meat tissue is subjected to a separating process to generate a liquefied fat-containing portion or stream and a defatted meat portion or stream. According to an embodiment of the invention the defatted meat portion of the fatty meat tissue can be separated from the fat content by means of applying a centrifugal force. Separation of the un-coagulated meat from the liquefied fat is typically performed by a decanter centrifuge. However, other methods of centrifugation may also provide a sufficient separation of the lean meat and fat content. A centrifugal decanter is generally preferred and may be selected among two-phase and three-phase decanters. Typically, a sanitary two-phase decanter centrifuge is used for maximum fat extraction. The separation of the fat from the lean meat in the liquid slurry provides two separate portions: a more solid defatted meat portion and a decanter effluent portion comprising liquefied fat and an aqueous phase comprising water soluble matter and fine suspended solids i.e. blood water. The blood proteins and cytoplasm proteins comprised in the blood water constitute an important component in meat in general with respect to yield and quality e.g. taste of the meat, colour, odour etc.

The recovery of the blood water components is in general used for mixing with the processed defatted lean meat. Hence, the water soluble matter and fine suspended solids of the liquefied fat-containing portion are recovered from the liquefied fat-containing portion. According to the invention the aqueous phase comprising these suspended or dissolved particles or proteins are recovered. In a preferred embodiment of the invention the suspended or dissolved particles or proteins are recovered by means of centrifugation. Applying a centrifugal force provides a separation into a fat portion and a defatted effluent comprising the aqueous phase with water soluble matter and fine suspended solids. A further phase may be recovered as a slurry comprising residue meat particles. A vertical clarifier centrifuge is generally used for processing the liquefied fat-containing portion. In an aspect of the invention, the present inventors have found that a vertical purifier centrifuge may be used for recovery. In addition to removing the fat, a vertical purifier centrifuge provides a slurry phase with high level of suspended matter, and an aqueous plasma phase with predominantly the dissolved substances. This improves the possibility for reducing the water content by concentration.

The aqueous phase typically comprises the water added to the fatty meat tissue during one or more of the previous process stages e.g. the meat grinding process and/or heating stage. However, merely recovering the aqueous phase and adding it back to the solid defatted meat portion results in a low fat meat portion with an added amount of water compared with the initial fatty meat tissue.

Surprisingly, the present inventors found that it is possible to obtain the water soluble matter and fine suspended solids for later addition to the lean meat portion without adding more water to the final low fat meat product compared with the amount of water of the initial fatty meat tissue. Thus, according to the present invention a step for removing a part of the water from the aqueous phase is performed. Preferably, the amount of water removed is equal to or larger than the amount of water added in an earlier process stage. Thereby, the blood proteins and cytoplasm proteins are concentrated in the remaining aqueous phase of the centrifuged defatted effluent. In a final step, the remaining concentrated aqueous phase is added to the low fat meat portion and mixed, thereby producing a final defatted meat product. If a slurry phase is recovered, this phase may be added to the mixer, optionally after being concentrated by removal of water as described for the aqueous phase above.

The present invention should not be limited to one particular method for removing water from the aqueous phase. However, in a certain embodiment of the present invention the concentration of the aqueous phase is achieved by evaporation or membrane filtration. According to the invention a membrane filtering process may be used to retain blood proteins and cytoplasm proteins. The openings of the filter allow small molecules to pass such as water molecules. Examples of membrane filtering methods include ultra filtration, nanofiltration and reverse osmosis using membranes with a cut-off value of 20.000 Dalton or less, which usually is similar to blood plasma concentration.

In general, the temperature of the aqueous phase should not exceed the coagulation temperature of the blood proteins and cytoplasm proteins suspended in the aqueous phase. The temperature of the aqueous solution should be 50°C or less. A suitable operation temperature is about 35-45°C. The temperature of the aqueous phase may exceed the recommended temperature for a shorter period of time without damaging the structure of the proteins and other solid particles. In a preferred embodiment the evaporation is performed using an evaporator equipped with a scraped surface heat exchanger and operating at a vacuum giving a maximum evaporation temperature of 50°C. In a more preferred embodiment the maximum evaporation temperature is 45°C.

In another preferred embodiment the concentration is performed in an evaporator, typically a forced circulation flash evaporator, using a heating unit having a heating surface temperature of 50°C or less. By using an evaporator designed with a heating surface temperature of maximum 50°C the risks of coagulation of the meat proteins are avoided. Thus, the dissolved or suspended particles of the blood water retain their functionality and properties when mixed together with the defatted meat portion. The preferred surface temperature of the heat exchanger may depend on the specific type of heat exchanger. Thus, the preferred heating surface temperature of the heat exchanger should be in the range of 25-60°C, preferably 30-50°C, and more preferably 35-45°C.

A forced circulation flash evaporator comprises a horizontal shell and tube heat exchanger, a flash chamber mounted above the heat exchanger, and a circulating pump. Evaporator liquid circulates through the heat exchanger tubes at high velocity to inhibit coating and enhance heat transfer. Liquid from the heat exchanger enters the flash chamber where water is flashed off.

In a preferred embodiment of the invention the final amount of water in the defatted meat product is equal to or less than the initial amount of water in the fatty meat tissue. Thereby, the final meat product retains its functionality and is more easy to use in formulating recipes. In addition, the product does not require any labelling of the product such as "water added", which would otherwise be required according to food legislation of some countries.

The defatted effluent from the clarifier centrifuge comprises mainly water with blood proteins and cytoplasm proteins and a remnant fat portion. The method according to the present invention removes water from the aqueous phase before adding the thus concentrated aqueous phase to the defatted meat portion. The concentration step removes at least 10%, 20%, 30%, 40%, 50%, 60%, 70%, 80%, or 90% of the water in the defatted effluent. In a preferred embodiment of the present invention the step of concentrating the aqueous phase comprises removal of at least 50% of the water from the aqueous phase. The amount of water removed may be equivalent to the amount of water added during the prior processing.

The present invention may be performed in a plant for preparing a defatted meat product, comprising:
- a heating unit for heating the ground fatty meat tissue to a temperature below the coagulation temperature of the fatty meat tissue,
- a first separating unit capable of separating the fatty meat tissue in a liquefied fat-containing portion and a defatted meat portion,
- a second separating unit capable of recovering an aqueous phase from the liquefied fat-containing portion,
- a device for mixing a defatted meat portion with an aqueous phase, wherein a device for removing water is interspaced between the second separation unit and the device for mixing the defatted meat portion with the aqueous phase.

In addition, the plant of the invention may contain further devices or units. Additional similar and/or identical devices and/or units may be used at any point during the meat defatting procedure and particular devices and/or units may be implemented more than once at any point in the plant.

The specific selection of grinding equipment is of minor importance for the present invention. The grinder may be any type or size grinder for reducing meat trimmings. The grinding of the meat trimmings before they are passed through the heat exchange pipe allows for easier, quicker, and more uniform heating of the meat trimmings.

Water or steam is added to the plant according to the present invention. The present invention should not be limited to adding water at one particular site or stage in the defatting process. Water may be added as liquid or steam such as by direct steam injection at several stages in the defatting process, where ever so is needed and at different temperatures and pressure. Water may be added to the product during the meat grinding step either as tempered water or by direct steam injection heating. According to the invention, water may be added to fatty meat tissue after grinding and heating, but prior to separation of the liquefied fat-containing phase and meat solids. The water may be added as tempered water or by direct steam injection.

The heating unit according to the present invention should be capable of heating the ground fatty meat tissue to a temperature at which the fat-containing portion of the fatty meat tissue is liquefied or softened. The heating unit may be a steam or tempered water jacketed tank, a sanitary shell and tube heat exchanger, a steam injection heater or similar, or a scraped surface heat exchanger or similar. A sanitary shell and tube heat exchanger typically uses tempered water as heating media. Direct steam injection is a process whereby steam is directly injected into the product stream. The steam injection heater or similar may be a steam injection heater as manufactured by GoldPeg International.

The scraped surface heat exchanger may be a Contherm scraped surface heat exchanger supplied by Alfa Laval. In scraped surface heat exchangers, the product enters the cylinder at the bottom and flows upwards. The heating or cooling medium travels in a countercurrent flow through a narrow annular channel. Rotating blades continuously remove product from the cylinder wall to ensure uniform heat transfer to the product. The product enters the cylinder in a corkscrew pattern in the same direction as the rotating part. This preserves product quality by providing a larger flow area, gentler product handling and reduced pressure drop across the inlet. The food product finally leaves the cylinder at the top. Both product flow and rotor speed can be varied to suit the particular properties of the product in the cylinder. The model of the scraped surface heat exchanger may be 6×3, 6x6, 6x9, or 6×11, preferably 6×9 with a heating surface of at least 0.8 m². Scraped-surface heat exchangers, in which a bladed shaft rotates and removes the product from the heat transfer wall areas, are suitable for heating and cooling sensitive food products.

The first separation unit capable of removing a liquefied fat-containing portion from the ground fatty meat tissue is typically a decanter centrifuge. Decanter centrifuges are normally based on horizontal separation technology and work at slower speeds. Separation in a decanter centrifuge takes place in a horizontal cylindrical bowl equipped with a screw conveyor. The feed enters the bowl through a stationary inlet tube and is accelerated smoothly by an inlet distributor. The centrifugal force that stems from the rotation then causes sedimentation of the solids on the wall of the bowl. The conveyor rotates in the same direction as the bowl, but at a different speed, thus moving the solids towards the conical end of the bowl. The cake leaves the bowl through the solids discharge openings into the casing. Separation takes place throughout the entire length of the cylindrical part of the bowl, and the liquefied fat-containing liquid leaves the bowl by flowing over adjustable plate dams into the casing. The decanter centrifuge of the present invention may be a two-phase or three-phase decanter centrifuge.

The second separating unit capable of recovering the aqueous phase of the liquefied fat-containing portion is typically a clarifying centrifuge. The clarifying centrifuge provides a separation into a fat-containing phase and a blood water phase including water soluble matter and fine suspended particles such as blood proteins and cytoplasm proteins. A purifying centrifuge will perform a more optimal removal of the fat, and leaves an aqueous phase with water soluble matter, and a slurry phase predominantly consisting of the suspended solids. Performing these separation procedures provides the possibility of adding the water soluble matter and fine suspended particles to the meat portion. However, directly adding these recovered aqueous phases including soluble proteins etc results in an added amount of water to the final meat product compared to the initial water content of the fatty meat tissue.

According to the present invention a device for removing water is required. The term "removing water" according to the above-mentioned aspect of the invention relates to a concentration of the water soluble matter and fine suspended particles in the aqueous phase. The device for removing water according to the present invention may be any type of device capable of removing water without discarding the water soluble and/or insoluble components. In a preferred embodiment the device for removing water from the aqueous phase is an evaporator and/or a membrane filter. A Membrane filtration unit separates out the different components in a feed stream on the basis of the size and shape of the micro-particles within it. This separation takes place by pumping the feed stream across the surface of a membrane with microscopic pores. Some components pass through - others cannot. Membrane filtration is often used to supplement conventional centrifugal separation processes based on gravity differences. Membrane filtration can also be used for concentration prior to evaporation. The evaporator uses pressure and/or an increase in temperature to remove water by evaporation. Due to coagulation of blood proteins and cytoplasm proteins in the aqueous phase the heating temperature during evaporation must be limited. In a preferred embodiment of the present invention the evaporator is a scraped surface heat exchanger. The scraped surface heat exchanger may be a Contherm scraped surface heat exchanger supplied by Alfa Laval as described above. An evaporator designed with a heating surface temperature of maximum 60°C, preferably 50°C eliminates the risks of coagulation but at the same time ensures a sufficiently fast evaporation of the water-content of the aqueous solution.

In a preferred embodiment of the present invention the device for removing water from the aqueous phase is capable of removing at least 50% of the water. It may even be capable to remove at least 60%, preferably at least 70%, more preferred at least 80%, and yet more preferred at least 90% of the water.

In an embodiment of the invention, the first and the second separation unit is combined in a single separation unit, such as a 3 phase decanter centrifuge. A 3 phase decanter centrifuge separates the heated ground fatty meat in a first portion containing defatted meat portion, a second portion containing clarified fat and a third portion containing an aqueous phase.

In a preferred embodiment of the present invention the second separation unit is a vertical centrifuge. The vertical centrifuge may be any type of vertical centrifuge. However, in a preferred embodiment the vertical centrifuge is a clarifier centrifuge or a purifier centrifuge. A clarifier centrifuge may comprise a number of discs helping the separation. The product passes down a central passage and is carried by the centrifugal forces towards the periphery of the bowl and then passes up through the disc stack. Two forces act on each solid and liquid particle. The particle is pushed upwards with the stream towards the centre while the centrifugal force directs it to the periphery. The residual force on denser particles will drive them towards the periphery, while less dense particles will be directed towards the centre of the bowl and raise to an outlet connection. A purifier centrifuge provides a similar system. However, a second outlet pipe is used for discharging water. The centrifuge separates into three layers or phases. With the purifier centrifuge a small remaining slurry of solids can be recovered and added to the final defatted meat product.

### Figures

Figure 1 is an outline of the plant of the present invention with the clarifier option.
Figure 2 is an outline of the plant of the present invention with the purifer option.

### Detailed description of the invention

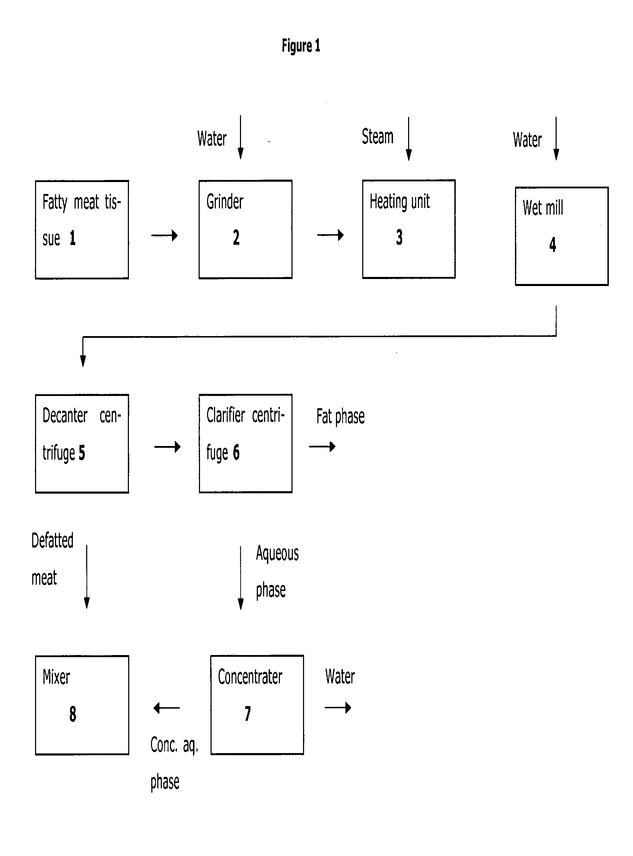

Figure 1 shows the flow sheet of an embodiment for the method and the plant of the present invention. The fatty meat tissue 1 arrives at a device for grinding 2 the fatty meat tissue. The fatty meat tissue is ground into a uniform size. Optional, water is added during the grinding process. The ground fatty meat tissue enters into a heating unit 3, wherein the ground meat tissue is heated to below the coagulation temperature which typically is approximately 40°C depending on the time of exposure. Steam may enter into the heating unit thereby adding water to the ground heated fatty meat tissue. The water may also be added as tempered water. Due to the processing of the heating unit the fat content of the fatty meat tissue becomes liquefied or softened and forms a slurry. The slurry enters into a wet mill 4 for additional disintegration. Water may be added at this point. The slurry is subsequently introduced into a decanter 5 to separate a defatted meat portion from a fat-containing portion of the fatty meat tissue slurry. The fat-containing portion enters into a decanter centrifuge 5, which produces an effluent comprising the fat-containing portion that is introduced into a clarifier centrifuge 6. The clarifier centrifuge substantially separates the fat from the aqueous portion of the fat-containing portion. The defatted effluent (aqueous phase) retrieved from the clarifier centrifuge enters a device for removing water 7 from the aqueous phase. Subsequent to this concentration of the aqueous phase it is mixed with the defatted meat in a device for mixing 8. The mixed defatted meat is finally cooled and processed further.

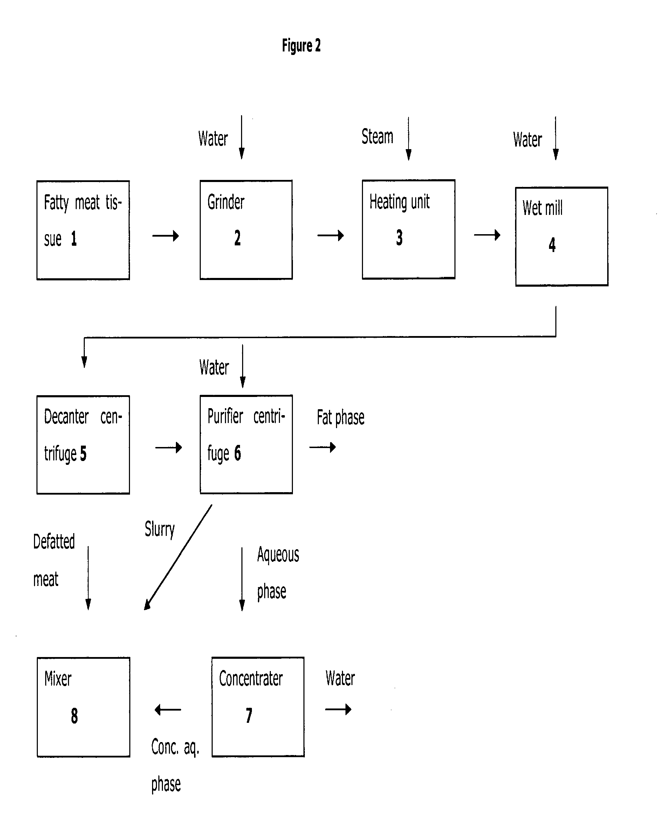

In Figure 2 the clarifier centrifuge (6) is replaced by a purifier centrifuge (6). This provides an additional stream of slurry bound for mixing, and the water phase enters a device for removing water (7). Additional water may be added during the purifier centrifuge operation.

The method according to the present invention should not be limited regarding the origin of the fatty meat tissue. Thus, any type of fatty meat tissue may be suitable for the defatting process and the fatty meat tissue may come from any animal species such as poultry, bovine, pork, lamb, fish etc. The fatty meat tissue from bovine and pork may have a fat content in the range of 70-80% by volume, while the typical fat content of poultry is around 20% by volume. The fatty meat tissue comprising approximately 25% by volume meat includes approximately 5% by volume protein and 20% by volume water.

The method of transferring the raw material between each step is of minor importance but the present invention should not be limited to a specific method of transferring the raw materials between each step of the defatting procedure. However, the method of transferring the raw material could be by recovering the processed raw material and manually transporting it to the next step or the raw material could be transferred by means of a transfer pipe system by e.g. pumping.

The terms "blood water" and "aqueous phase" may be used interchangeably and refers to an aqueous solution containing blood proteins and cytoplasm proteins from the lean meat tissue. The terms "solid suspended particles", "fine suspended solids", "water soluble matter", "blood proteins", "blood water proteins", "cytoplasm proteins", "meat proteins" may be used interchangeably and all refer to an aqueous phase containing water soluble matter from the lean meat tissue.

The term "coagulation" refers to the coagulation of protein. Without being bound by any specific theory the coagulation of protein is a separation or precipitation from a dispersed state of suspended or dissolved particles. Coagulation may result from prolonged heating, addition of an electrolyte, or from a condensation reaction between solute and solvent. Coagulation of protein takes place in two steps. The first step is denaturation and the second step is simply the precipitation of the insoluble denatured protein. It is usually supposed that denaturation is irreversible.

According to the present invention a decanter centrifuge is used in a first separation step. A decanter centrifuge separates solids from one or two liquid phases in one single continuous process. This is done using centrifugal forces that can be well beyond 3000 times greater than gravity. When subject, to such forces, the denser solid particles are pressed outwards against the rotating bowl wall, while the less dense liquid phase forms a concentric inner layer. Different dam plates are used to vary the depth of the liquid - the so-called pond - as required. The sediment formed by the solid particles is continuously removed by the screw conveyor, which rotates at a different speed than the bowl. As a result, the solids are gradually "ploughed" out of the pond and up the conical "beach". The centrifugal force compacts the solids and expels the surplus liquid. The dried solids then discharge from the bowl. The clarified liquid phase or phases overflow the dam plates situated at the opposite end of the bowl. Baffles within the centrifuge casing direct the separated phases into the correct flow path and prevent any risk of cross-contamination. The speed of the screw conveyor may be automatically adjusted by use of the variable frequency drive (VFD) in order to adjust to variation in the solids load.

The decanter may be provided with pairing discs that prevent a floating fraction to enter into the lean meat stream. The floating fraction is guided to the discharge opening port and exits the decanter together with the aqueous phase. The decanters usually have a maximum G force above 1000 G to secure a fast separation of the defatted meat from the fat-containing portion.

### Examples

### Example 1

Figure 1 illustrates the mass flow of part of the defatting process. According to a specific embodiment a stream of ground fatty meat tissue with a water content of 6.900 lbs/h enters the decanter centrifuge 5. Said decanter centrifuge separates the ground fatty meat tissue into a defatted meat portion comprising a water content of 5.130 lbs/h and a decanter effluent portion containing 1.770 lbs/h of water. The decanter effluent portion enters into a clarifier centrifuge 6 which separates the decanter effluent portion into a fat portion stream and a defatted effluent (aqueous phase). The aqueous phase comprises 1.760 lbs/h and the fat portion comprises 10 lbs/h. The aqueous phase enters into a device for removing water 7. During the concentration stage a water stream is removed from the aqueous phase in an amount of 1009 lbs/h. The concentrated aqueous phase comprises 751 Ibs/h of water. The defatted meat portion and the concentrated aqueous phase are mixed in a device for mixing 8. The final product includes 5.881 lbs/h. Thus, a total of 1019 lbs/h of water is removed from the ground fatty meat tissue.

### Example 2

### Turkey MDM

1000 kg of Turkey MDM were recovered by the use of a Baader series 603 Belt Separator with 3 mm holes and medium pressure. During the deboning process the deboned product was added 250 kg of water, so that the recovered MDM was changed from a composition of 21.2 % fat and 62.5 % moisture to 17 % fat and 70 % moisture. The product was heated to 38°C in an Alfa Laval Contherm 6*6 scraped surface heat exchanger using 50°C water as heating media to eliminate any color changes. The product was fed through a Rietz Grinder type RA with 1/4" holes and fed to an Alfa Laval Foodec 200 decanter centrifuge for fat separation.

This resulted in the recovery of 626 kg of meat with a moisture content of 76,0 % and 4,5 % fat.

The effluent phase was separated further in an Alfa al LAPX404 purifier centrifuge, which resulted in a fat phase containing 97,5 % fat and 2,7 % moisture, a separator slurry phase of 20 kg with 3,7 % fat and 87,6 % moisture. The water phase constitutes of 212 kg with 95,6 % water and 1,7 % fat. In order not to lose the fat and protein this fraction is concentrated by evaporation in an Alfa Laval ConVap 6*9 evaporator at 40 °C to 78,8 % water and 7,9 % fat.

The decanter solids meat, the Separator sludge phase and the concentrated blood water could be mixed into a firm meat paste with high binding capacity.

### Example 3

### Pork meat

500 kg of fatty materials from the deboning lines in the slaugthering house were ground using a 4 mm meat grinder type Wolfking C200 with 4 mm hole plate. The meat was heated using a GoldPeg International RotaTherm pilot unit for heating the product to 40°C using direct steam injection. In this process approximately 10 % of water is added to the product in the form of steam.

The heated product was then fed to an Alfa Laval Foodec 200 decanter centrifuge for fat separation.

This resulted in the recovery of 188 kg of meat with a moisture content of 69,4 % and 12 % fat.

The effluent phase was separated further in an Alfa al LAPX404 purifier centrifuge, which resulted in a fat phase containing 98 % fat and 1,9 % moisture, a separator slurry phase of 10 kg with 3,0 % fat and 90 % moisture. The 60 kg water phase constitutes of 95,4 % water and 1,4 % fat. The water phase was evaporated in an Alfa Laval ConVap 6*9 evaporator at 40 °C to 75 % water and 8,6% fat. This equals removal of the injected water for heating.

The decanter solids meat, the Separator sludge phase and the concentrated blood water could be mixed into a firm meat paste with high binding capacity.

### Example 4

### Textured beef

2000 kg of fatty beef trimmings (65 % fat and 26 % ture) was processed through a Baader series 603 Belt Separator with 2 mm holes with maximum pressure to remove cartilage and bone chips - the meat fraction were hereby reduced by approximately 5 %. After the refining it is heated to 41 °C using a pilot RotaTherm unit for heating. During the heating approximately 18 % steam and steam condensate had been added. The meat product was separated using an Alfa Laval Foodec 200 decanter centrifuge.

This resulted in the recovery of 760 kg of meat with a moisture content of 66,3 % and 13,8 % fat.

The effluent phase was separated further in an Alfa al LAPX404 purifier centrifuge, which resulted in a fat phase containing 98,5 % fat and 1,4 % moisture, a separator slurry phase of 10 kg with 2,0 % fat and 91,0 % moisture. The water phase constitutes of 284 kg with 97,9 % water and 0,7 % fat. In order not to lose the fat and protein this fraction is concentrated by evaporation in an Alfa Laval ConVap 6*9 evaporator at 40 °C to with 67,0 % water and 11,9 % fat.

The decanter solids meat, the Separator sludge phase and the concentrated blood water could be mixed into a firm meat paste with high binding capacity.

### Example 5

### Blood plasma and Textured beef

2000 kg of fatty beef trimmings (65 % fat and 26 % moisture) was processed through a Baader series 603 Belt Separator with 2 mm holes with maximum pressure to remove cartilage and bone chips - the meat fraction were hereby reduced by approximately 5 %. At the same time blood plasma was added to act as a fat extractant. The refined product it is heated to 41 °C using a pilot RotaTherm unit for heating. During the heating approximately 18 % steam and steam condensate had been added. The meat product was separated using an Alfa Laval Foodec 200 decanter centrifuge.

This resulted in the recovery of 805 kg of meat with a moisture content of 70,5 % and 10,5 % fat.

The effluent phase was separated further in an Alfa al LAPX404 purifier centrifuge, which resulted in a fat phase containing 98,5 % fat and 1,4 % moisture, a separator slurry phase of 10 kg with 2,0 % fat and 88,5 % moisture. The water phase constitutes of 355 kg with 91,9 % water and 1,3 % fat. In order not to loose the fat and protein this fraction is concentrated by evaporation in an Alfa Laval ConVap 6*9 evaporator at 40 °C to with 72,0 % water and 4,4 % fat.

The decanter solids meat, the Separator sludge phase and the concentrated blood water could be mixed into a firm meat paste with red color and very high binding capacity.

## Claims

1. A method for producing a defatted meat product comprising the steps of:
- heating ground fatty meat tissue to a temperature below the coagulation temperature of the fatty meat tissue,
- adding water or steam to the fatty meat tissue,
- separating the fatty meat tissue in a liquefied fat-containing portion and a defatted meat portion,
- recovering an aqueous phase from the liquefied fat-containing portion, and
- adding and mixing the aqueous phase to the defatted meat portion, wherein the aqueous phase is concentrated at a temperature of 50°C or less by removal of water prior to the addition to the defatted meat portion.

2. The method according to claim 1, wherein the concentration of the aqueous phase is achieved by evaporation or membrane filtration.

3. The method according to claim 2, wherein the evaporation is performed using an evaporator equipped with a scraped surface heat exchanger and operating at a vacuum giving a maximum evaporation temperature of 50°C.

4. The method according to any of the claims 1 to 3, wherein the concentration is performed in an evaporator, typically a forced circulation flash evaporator, using a heating unit having a heating surface temperature of 50°C or less.

5. The method according to any of the preceding claims, wherein the final amount of water in the defatted meat product is equal to or less than the initial amount of water in the fatty meat tissue.

6. The method according to any of the preceding claims, wherein the step of concentrating the aqueous phase comprises removal of at least 50% of the water from the aqueous phase.

7. The method according to any of the claims 1 to 6, wherein the heating of the ground fatty meat tissue is performed at a temperature below 50°C.

## Patentansprüche

1. Verfahren zum Erzeugen eines entfetteten Fleischprodukts, mit folgenden Schritten:
- Erwärmen von gewolftem fetthaltigem Fleischgewebe auf eine Temperatur unterhalb der Koagulationstemperatur von fetthaltigem Fleischgewebe;
- Zugeben von Wasser oder Wasserdampf zum fetthaltigen Fleischgewebe;
- Auftrennen des fetthaltigen Fleischgewebes zu einem verflüssigten fetthaltigen Anteil und einem entfetteten Fleischanteil;
- Rückgewinnen einer wässrigen Phase aus dem verflüssigten fetthaltigen Anteil; und
- Zugeben und Mischen der wässrigen Phase zu bzw. mit dem entfetteten Fleischanteil;
wobei die wässrige Phase durch Entfernen von Wasser vor der Zugabe zum entfetteten Fleischanteil bei einer Temperatur von 50 °C oder weniger konzentriert wird.

2. Verfahren nach Anspruch 1, bei dem das Konzentrieren der wässrigen Phase durch Verdampfen oder Membranfiltration erfolgt.

3. Verfahren nach Anspruch 2, bei dem das Verdampfen unter Verwendung von einem mit einem Dünnschicht - Wärmetauscher ausgerüsteten Verdampfer und Arbeiten mit Unterdruck zu einer Höchstverdampfungstemperatur von 50 °C erfolgt.

4. Verfahren nach einem der Ansprüche 1 bis 3, bei dem das Verdampfen in einem Verdampfer erfolgt, typischerweise einem Zwangsumlauf-Flash-Verdampfer mit einer Heizeinheit, deren Heizflächentemperatur 50 °C oder weniger beträgt.

5. Verfahren nach einem der vorgehenden Ansprüche, bei dem die endgültige Wassermenge im entfetteten Fleischprodukt gleich oder niedriger ist als die Anfangswassermenge im fetthaltigen Fleischgewebe.

6. Verfahren nach einem der vorgehenden Ansprüche, bei dem das Konzentrieren der wässrigen Phase das Entfernen von mindestens 50 % des Wasser aus letzterer beinhaltet.

7. Verfahren nach einem der Ansprüche 1 bis 6, bei dem das Erwärmen des gewolften Fleischgewebes bei einer Temperatur unter 50 ° erfolgt.

## Revendications

1. Procédé de fabrication d'un produit de viande dégraissée comprenant les étapes consistant à :
- chauffer un tissu de viande hachée grasse à une température inférieure à la température de coagulation du tissu de viande grasse,
- ajouter de l'eau ou de la vapeur d'eau au tissu de viande grasse,
- séparer le tissu de viande grasse en une portion riche en graisse liquéfiée, et une portion de viande dégraissée,
- récupérer une phase aqueuse de la portion riche en graisse liquéfiée, et
- ajouter et mélanger la phase aqueuse à la portion de viande dégraissée,
dans lequel la phase aqueuse est concentrée en retirant l'eau à une température inférieure ou égale à 50°C avant l'ajout à la portion de viande dégraissée.

2. Procédé selon la revendication 1, dans lequel la concentration de la phase aqueuse est obtenue par évaporation ou par filtration à l'aide d'une membrane.

3. Procédé selon la revendication 2, dans lequel l'évaporation est obtenue en utilisant un évaporateur équipé d'un échangeur thermique à surface raclée et fonctionnant sous vide permettant une température maximale d'évaporation de 50°C.

4. Procédé selon l'une des revendications 1 à 3, dans lequel la concentration est réalisée dans un évaporateur, typiquement dans un évaporateur instantané à circulation forcée, en utilisant une unité de chauffage possédant une température de surface de chauffage inférieure ou égale à 50°C.

5. Procédé selon l'une des revendications précédentes, dans lequel la quantité finale d'eau contenue dans le produit de viande dégraissée est inférieure ou égale à la quantité initiale d'eau dans le tissu de viande grasse.

6. Procédé selon l'une des revendications précédentes, dans lequel l'étape de concentration de la phase aqueuse comprend un retrait d'au moins 50 % de l'eau contenue dans la phase aqueuse.

7. Procédé selon l'une des revendications 1 à 6, dans lequel le chauffage du tissu de viande hachée grasse est réalisé à une température inférieure à 50°C.
